# FASCICULE DE BREVET EUROPEEN

(11) **EP 0 872 395 B1**
(45) Date de publication et mention de la délivrance du brevet: **20.03.2002**
(21) Numéro de dépôt: 98400804.5
(22) Date de dépôt: 03.04.1998
(51) Int. Cl.: B60T 8/00

(54) **Système de caractérisation d'un calculateur de pilotage d'un dispositif d'anti-blocage de roue de véhicule automobile**
System zur Charakterisierung eines Steuerrechners eines Antiblockiersystems für Kraftfahrzeugräder
System for characterizing a control computer in a vehicle wheel antilock device

(30) Priorité: 17.04.1997 FR 9704776
(43) Date de publication de la demande: 21.10.1998
(73) Titulaire: AUTOMOBILES PEUGEOT, 75116 Paris (FR); AUTOMOBILES CITROEN, 92200 Neuilly-sur-Seine (FR)
(72) Inventeur: Durieux, Jean-Marc, 25200 Montbeliard (FR)
(74) Mandataire: Habasque, Etienne Joel Jean-François

(56) Documents cités:
- PATENT ABSTRACTS OF JAPAN vol. 096, no. 012, 26 décembre 1996 & JP 08 198087 A (MAZDA MOTOR CORP), 6 août 1996,

## Description

La présente invention concerne un système de caractérisation d'un calculateur de pilotage d'un dispositif d'anti-blocage de roue, intégré dans un système électronique embarqué à bord d'un véhicule automobile, selon le préambule de la revendication 1.

Jusqu'à présent, on prévoyait autant de calculateurs que de versions de logique de pilotage. On était même amené à prévoir plusieurs calculateurs pour un même type de véhicule en fonction de sa définition de freinage (freins à tambour ou à disques, version berline ou break, par exemple).

Ceci présentait l'inconvénient de nécessiter la fabrication et la gestion de plusieurs calculateurs.

On a déjà pensé à ne prévoir qu'un calculateur dont la mémoire contient toutes les versions de logique de pilotage, associé à des moyens de reconnaissance d'une pièce, par exemple du faisceau électrique, du véhicule et de choix d'une version de logique en fonction de la pièce reconnue.

Ceci présente un inconvénient analogue, à savoir la nécessité de fabriquer et de gérer non plus des calculateurs, mais des pièces, par exemple des faisceaux, de véhicule.

Le but de l'invention est donc de résoudre ces problèmes.

A cet effet, l'invention a pour objet un système de caractérisation d'un calculateur de pilotage d'un dispositif d'anti-blocage de roue, intégré dans un système électronique embarqué à bord d'un véhicule automobile, à l'aide d'un outil de télécodage, le calculateur d'anti-blocage de roue comportant une unité de traitement d'informations associée à des moyens de stockage de données de fonctionnement de celui-ci, caractérisé en ce qu'une logique unique de pilotage du dispositif d'anti-blocage de-roue est chargée dans l'unité de traitement d'informations, en ce que les moyens de stockage de données comprennent plusieurs jeux de paramètres caractéristiques sélectionnables pour différents véhicules, et en ce que l'outil de télécodage comporte des moyens de reconnaissance du véhicule et des moyens de caractérisation du calculateur d'anti-blocage de roue en associant à la logique chargée dans l'unité de traitement d'informations de celui-ci, le jeu de paramètres caractéristiques correspondant au véhicule reconnu.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant la structure d'un système de caractérisation selon l'invention; et
- les Figs.2, 3 et 4 représentent différents organigrammes illustrant le fonctionnement d'un tel système.

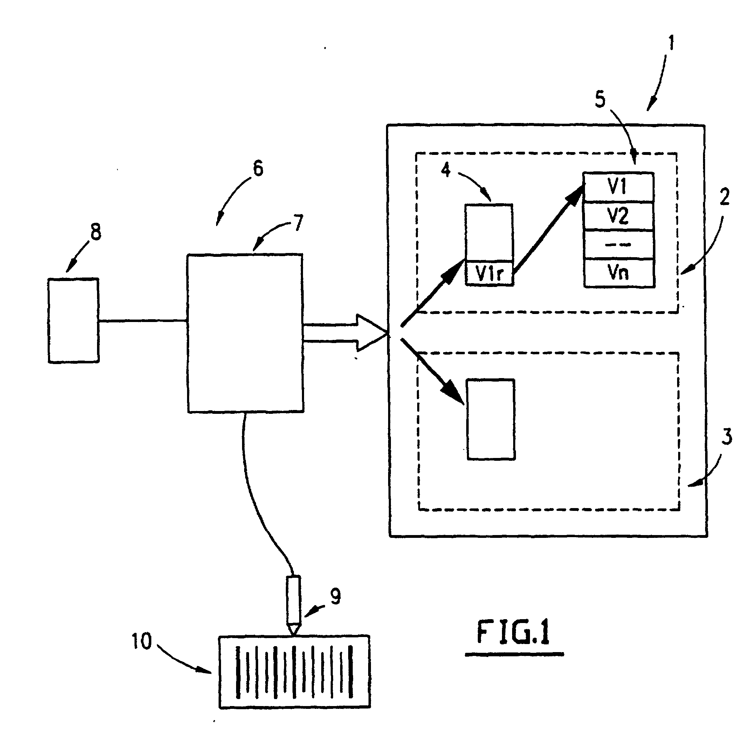

On a en effet représenté sur la figure 1, un système de caractérisation d'un calculateur de pilotage d'un dispositif d'anti-blocage de roue intégré dans un système électronique embarqué à bord d'un véhicule automobile.

Ce système électronique embarqué à bord du véhicule est désigné par la référence générale 1 sur cette figure et comporte par exemple un calculateur d'anti-blocage de roue désigné par la référence générale 2, et d'autres calculateurs dont l'un est désigné par la référence générale 3, permettant de piloter d'autres fonctions embarquées à bord du véhicule.

De façon classique, le calculateur d'anti-blocage de roue 2 comporte une unité de traitement d'informations désignée par la référence générale 4 sur cette figure, associée à des moyens de stockage de données de fonctionnement de celle-ci, désignés par la référence générale 5.

Pour caractériser ce calculateur, dans le système selon l'invention, on utilise un outil de télécodage désigné par la référence générale 6 sur cette figure, adapté pour être raccordé au système électronique du véhicule par exemple pour la prise de diagnostic de celui-ci.

Cet outil de télécodage comporte également une unité de traitement d'informations désignée par la référence générale 7 et associée à des moyens de stockage de données désignés par la référence générale 8.

En fait, dans le système selon l'invention, une logique unique de pilotage du dispositif d'anti-blocage de roue est chargée dans l'unité de traitement d'informations 4 du calculateur d'anti-blocage de roue 2 et les moyens de stockage de données correspondants désignés par la référence générale 5, comprennent plusieurs jeux de paramètres caractéristiques sélectionnables pour différents véhicules.

Ces jeux de paramètres caractéristiques sont par exemple désignés par les références V1, V2 et Vn sur cette figure pour des véhicules de types 1,2 et n par exemple.

L'outil de télécodage 6 comporte quant à lui des moyens de reconnaissance du véhicule et des moyens de caractérisation du calculateur d'anti-blocage de roue 2 de celui-ci, en associant à la logique chargée dans l'unité de traitement d'informations 4 de celui-ci, le jeu de paramètres caractéristiques correspondant au véhicule reconnu.

Ces moyens de reconnaissance du véhicule et de caractérisation du calculateur d'anti-blocage de roue sont constitués par l'unité de traitement d'informations 7 de cet outil, associée aux moyens de stockage de données 8.

En fait, l'outil de télécodage 6 peut comporter des moyens de lecture d'un code à barres d'identification du véhicule.

Ces moyens de lecture comprennent par exemple un crayon optique désigné par la référence générale 9 sur cette figure, adapté pour lire une information se présentant sous la forme d'un code à barres désigné par la référence générale 10 sur cette figure, porté par le véhicule.

On conçoit alors qu'en fonction des informations lues sur ce code, l'unité de traitement d'informations 7 de cet outil de télécodage 6 est adaptée pour reconnaître le véhicule par exemple en consultant une table de correspondance stockée au préalable dans les moyens 8 associés à cette unité.

Cependant, et comme on l'a indiqué précédemment, le système électronique embarqué à bord du véhicule peut également comporter au moins un autre calculateur différent du calculateur d'anti-blocage de roue 2, tel que le calculateur désigné par la référence générale 3 sur cette figure.

Ce calculateur peut par exemple être le calculateur du boîtier de servitude du véhicule.

L'outil de télécodage 6 peut alors comporter également des moyens d'identification de cet autre calculateur 3 pour reconnaître le véhicule.

A cet effet, l'unité de traitement d'informations 7 de l'outil de télécodage 6 peut être adaptée pour échanger des informations avec cet autre calculateur 3, afin de permettre la reconnaissance du véhicule.

Ces moyens d'échange d'informations, constitués par exemple par l'unité de traitement d'informations 7 de l'outil de télécodage 6, comportent alors par exemple des moyens d'initialisation de l'échange pour synchroniser la transmission des informations entre cet outil de télécodage 6 et l'autre calculateur 3, des moyens de réception d'un message d'identification émis par cet autre calculateur en direction de cet outil de télécodage 6 et des moyens de reconnaissance du véhicule, à partir de ce message d'identification, l'unité de traitement d'informations 7 de l'outil de télécodage consultant alors par exemple une table de correspondance contenue dans les moyens de stockage de données 8 associés à celle-ci.

On conçoit alors qu'en fonction de la reconnaissance du véhicule, opérée selon l'un et/ou l'autre des procédés décrits précédemment, l'outil de télécodage 6 peut charger dans le calculateur d'anti-blocage de roue 2, et par exemple dans l'unité de traitement d'informations 4 de celui-ci, un message contenant au -moins une information de localisation du jeu de paramètres sélectionnables correspondant au véhicule reconnu, dans les moyens de stockage de données 5 associés à cette unité de traitement d'informations de ce calculateur.

Ce message a été au préalable stocké dans les moyens de stockage 8 de cet outil.

C'est ainsi par exemple que sur cette figure, ce message est chargé dans cette unité de traitement d'informations 4 par l'outil de télécodage 6, et est désigné par la référence V1r, ce qui permet à l'unité de traitement d'informations 4 et plus particulièrement à la logique de pilotage du calculateur d'anti-blocage de roue chargée dans celle-ci, de sélectionner le jeu de paramètres V1 correspondant à un véhicule V1 reconnu, afin d'activer la loi de commande correspondante.

Il va de soi bien entendu que le message chargé par l'outil de télécodage 6 dans cette unité de traitement d'informations 4 peut également comporter d'autres informations telles que par exemple le lieu de chargement de celui-ci dans cette unité.

De plus, une étape de contrôle peut également être mise en oeuvre par l'unité de traitement 7 de l'outil de télécodage 6 pour contrôler l'état de caractérisation du calculateur d'anti-blocage de roue 2 afin de déterminer si celui-ci a déjà été caractérisé ou non.

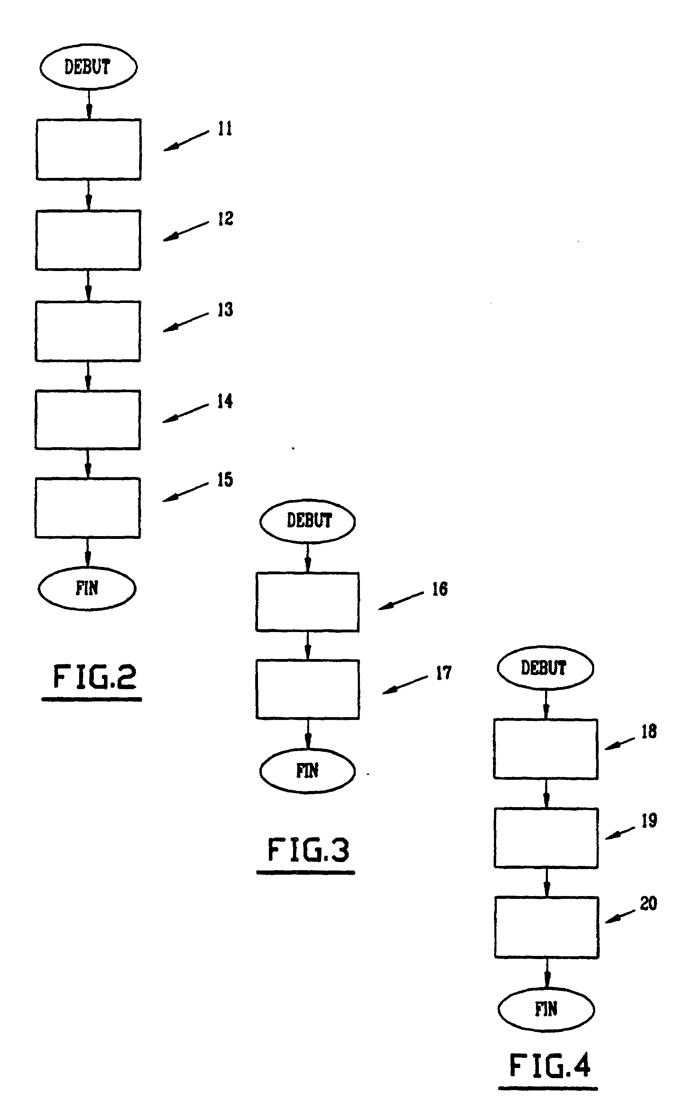

Ce fonctionnement est illustré sur les figures 2,3 et 4.

C'est ainsi que sur la figure 2, la première étape de ce fonctionnement consiste en une étape de reconnaissance du véhicule par l'outil de télécodage, désignée par la référence générale 11 sur cette figure, ce qui permet, une fois que ce véhicule a été reconnu, d'initialiser l'échange d'informations entre l'outil et le calculateur anti-blocage de roue lors d'une étape désignée par la référence générale 12.

Lors de l'étape 13, l'outil de télécodage vérifie l'état de caractérisation de ce calculateur, pour, lors de l'étape 14, permettre le chargement dans celui-ci du message contenant l'information de localisation du jeu de paramètres sélectionnables correspondant au véhicule reconnu.

Une fois ce message chargé dans le calculateur d'anti-blocage de roue, celui-ci émet en direction de l'outil par exemple, un accusé de réception lors d'une étape désignée par la référence générale 15.

Comme on l'a indiqué précédemment, la reconnaissance peut être assurée par lecture d'un code à barres ou par identification d'un calculateur du système électronique embarqué à bord du véhicule, autre que le calculateur d'anti-blocage de roue.

Sur la figure 3, on a illustré par les références 16 et 17 respectivement, l'étape de lecture du code à barres sur le véhicule et l'étape de reconnaissance de celui-ci à partir de ce code, ces étapes étant mises en oeuvre par l'outil de télécodage.

Sur la figure 4, on a représenté l'autre procédé de reconnaissance du véhicule par identification de l'un de ses calculateurs.

Sur cette figure, l'étape 18 correspond à l'initialisation de l'échange d'informations entre l'outil de télécodage et l'autre calculateur 3, qui permet à cet autre calculateur d'émettre lors de l'étape 19, un message d'identification à destination de cet outil de télécodage 6, pour permettre la reconnaissance du véhicule par cet outil, lors de l'étape 20.

On conçoit alors que dans le système selon l'invention, le calculateur d'anti-blocage de roue comporte une unité de traitement d'informations dans laquelle est chargée une logique unique, cette unité de traitement d'informations étant associée à des moyens de stockage permettant de stocker plusieurs jeux de paramètres caractéristiques de fonctionnement correspondant à différents véhicules.

L'outil de télécodage est alors adapté pour reconnaître le véhicule par exemple par dialogue avec un autre calculateur du système électronique du véhicule, pour charger dans le calculateur d'anti-blocage de roue, une information de localisation du jeu de paramètres correspondant au véhicule reconnu dans les moyens de stockage de données de ce calculateur, afin de caractériser ce calculateur d'anti-blocage de roue en fonction du véhicule reconnu.

Ceci permet alors de simplifier ces opérations de caractérisation.

## Revendications

1. Système de caractérisation d'un calculateur de pilotage d'un dispositif d'anti-blocage de roue, intégré dans un système électronique (1) embarqué à bord d'un véhicule automobile, à l'aide d'un outil de télécodage (6), le calculateur d'anti-blocage de roue (2) comportant une unité de traitement d'informations (4) associée à des moyens de stockage de données (5) de fonctionnement de celui-ci, **caractérisé en ce qu'**une logique unique de pilotage du dispositif d'anti-blocage de roue est chargée dans l'unité de traitement d'informations (4), **en ce que** les moyens de stockage de données (5) comprennent plusieurs jeux de paramètres caractéristiques sélectionnables (V1, V2,Vn) pour différents véhicules, et **en ce que** l'outil de télécodage (6) comporte des moyens (7,8) de reconnaissance du véhicule et des moyens (7,8) de caractérisation du calculateur d'anti-blocage de roue (2) en associant à la logique chargée dans l'unité de traitement d'informations (4) de celui-ci, le jeu de paramètres caractéristiques correspondant au véhicule reconnu.

2. Système selon la revendication 1, **caractérisé en ce que** l'outil de télécodage (6) comporte en outre des moyens de lecture (9) d'un code à barres (10) d'identification du véhicule.

3. Système selon la revendication 1 ou 2, **caractérisé en ce que** le système électronique (1) du véhicule comporte au moins un autre calculateur (3) différent du calculateur d'anti-blocage de roue (2) et **en ce que** l'outil de télécodage (6) comporte en outre des moyens (7,8) d'identification de cet autre calculateur pour reconnaître le véhicule.

4. Système selon la revendication 3, **caractérisé en ce que** les moyens d'identification de cet autre calculateur comporte des moyens (7) d'échange d'informations avec celui-ci.

5. Système selon la revendication 4, **caractérisé en ce que** les moyens d'échange d'informations comprennent des moyens (7) d'initialisation de l'échange d'informations entre l'outil de télécodage (6) et l'autre calculateur (3), des moyens (7) de réception d'un message d'identification émis par cet autre calculateur (3) et des moyens (7,8) de reconnaissance du véhicule à partir de ce message.

6. Système selon l'une quelconque des revendications précédentes, **caractérisé en ce que** les moyens (7,8) de caractérisation du calculateur d'anti-blocage de roue (2), de l'outil de télécodage (6), comportent des moyens (7,8) de chargement dans celui-ci d'un message contenant au moins une information (V1r) de localisation du jeu de paramètres sélectionnables correspondant au véhicule dans les moyens (5) de stockage de données associés à l'unité de traitement d'informations (4) de ce calculateur.

7. Système selon la revendication 6, **caractérisé en ce que** le message chargé dans le calculateur d'anti-blocage de roue (2), comprend en outre au moins une information concernant le lieu de chargement de celui-ci dans ce calculateur.

8. Système selon l'une quelconque des revendications précédentes, **caractérisé en ce que** l'outil de télécodage (6) comporte en outre des moyens (7,8) de contrôle de l'état de caractérisation du calculateur d'anti-blocage de roue.

## Patentansprüche

1. System zur Charakterisierung eines Steuerrechners eines Antiblockiersystems, das in ein an Bord eines Kraftfahrzeugs eingebautes elektronisches System (1) integriert ist, mit Hilfe eines Fernkodierungswerkzeugs (6), wobei der Antiblockiersystemsrechner (2) eine Informationsverarbeitungseinheit (4) aufweist, der Mittel zur Speicherung von Funktionsdaten (5) derselben zugeordnet sind, **dadurch gekennzeichnet, daß** eine einzige Steuerlogik der Rad-Antiblokkiereinrichtung in die Informationsverarbeitungseinheit (4) geladen ist, daß die Mittel zur Speicherung der Daten (5) mehrere Sätze von wählbaren charakteristischen Parametern (V1, V2, Vn) für verschiedene Fahrzeuge enthalten und daß das Fernkodierungswerkzeug (6) Mittel (7, 8) zur Erkennung des Fahrzeugs und Mittel (7, 8) aufweist zur Charakterisierung des Antiblockiersystemsrechners (2), durch Zuordnung des dem erkannten Fahrzeug entsprechenden Satzes von charakteristischen Parametern zu der Logik, die in die Informationsverarbeitungseinheit (4) desselben geladen ist.

2. System nach Anspruch 1, **dadurch gekennzeichnet, daß** das Fernkodierungswerkzeug außerdem eine Einrichtung (9) zum Lesen eines Barcodes (10) zur Identifizierung des Fahrzeugs aufweist.

3. System nach Anspruch 1 oder 2, **dadurch gekennzeichnet, daß** das elektronische System (1) des Fahrzeugs wenigstens einen anderen, von dem Antiblokkiersystemsrechner (2) verschiedenen Rechner (3) aufweist und daß das Fernkodierungswerkzeug (6) außerdem Mittel (7, 8) zur Identifizierung dieses anderen Rechners zum Zweck zur Erkennung des Fahrzeugs aufweist.

4. System nach Anspruch 3, **dadurch gekennzeichnet, daß** die Mittel zur Identifizierung dieses anderen Rechners Mittel (7) zum Informationsaustausch mit diesem umfassen.

5. System nach Anspruch 4, **dadurch gekennzeichnet, daß** die Mittel zum Informationsaustausch Mittel (7) zur Initialisierung des Informationsaustausches zwischen dem Fernkodierungswerkzeug (6) und dem anderen.Rechner (3), Mittel (7) zur Empfang einer von diesem anderen Rechner (3) ausgesandten Identifizierungsnachricht und Mittel (7, 8) zum Erkennen des Fahrzeugs anhand dieser Nachricht umfassen.

6. System nach einem der vorstehenden Ansprüche, **dadurch gekennzeichnet, daß** die zur Charakterisierung des Antiblockiersystemsrechners (2) dienenden Mittel (7, 8) des Fernkodierungswerkzeugs (6) Mittel (7, 8) zum Laden einer Nachricht in denselben umfassen, welche Nachricht wenigstens eine Information (V1r) zur Lokalisierung des Satzes von wählbaren Parametern, der dem Fahrzeug entspricht, in den Mitteln (5) zur Datenspeicherung enthält, die der Informationsverarbeitungseinheit (4) dieses Rechners zugeordnet sind.

7. System nach Anspruch 6, **dadurch gekennzeichnet, daß** die in den Antiblokkiersystemsrechner (2) geladene Nachricht außerdem wenigstens eine Information enthält, die den Ladeort derselben in den Rechner betrifft.

8. System nach einem der vorstehenden Ansprüche, **dadurch gekennzeichnet, daß** das Fernkodierungswerkzeug (6) außerdem Mittel (7, 8) zur Kontrolle des Zustands der Charakterisierung des Antiblockiersystemsrechners aufweist.

## Claims

1. System for characterizing a computer for controlling a wheel antilock device, integrated in an electronic system (1) on board a motor vehicle, with the aid of a remote-coding tool (6), the wheel antilock computer (2) including an information processing unit (4) associated with means (5) for storing operating data therefor, **characterized in that** a single logic for controlling the wheel antilock device is loaded into the information processing unit (4), **in that** the data storage means (5) comprise a plurality of sets of selectable characteristic parameters (V1, V2, Vn) for different vehicles, and **in that** the remote-coding tool (6) includes means (7,8) for recognizing the vehicle and means (7,8) for characterising the wheel antilock computer (2) by associating with the logic loaded into the information processing unit (4) thereof the set of characteristic parameters corresponding to the recognized vehicle.

2. System according to Claim 1, **characterized in that** the remote-coding tool (6) further includes means (9) for reading a bar code (10) for identifying the vehicle.

3. System according to Claim 1 or 2, **characterized in that** the electronic system (1) of the vehicle includes at least one other computer (3) different from the wheel antilock computer (2) and **in that** the remote-coding tool (6) further includes means (7,8) for identifying this other computer in order to recognize the vehicle.

4. System according to Claim 3, **characterized in that** the means for identifying this other computer includes means (7) for exchanging information therewith.

5. System according to Claim 4, **characterized in that** the means for exchanging information comprise means (7) for initializing the exchange of information between the remote-coding tool (6) and the other computer (3), means (7) for receiving an identification message transmitted by this other computer (3) and means (7,8) for recognizing the vehicle from this message.

6. System according to any one of the preceding claims, **characterized in that** the means (7,8) for characterizing the wheel antilock computer (2), of the remote-coding tool (6), include means (7,8) for loading into it a message containing at least one item of information (V1r) for locating the set of selectable parameters corresponding to the vehicle in the data storage means (5) associated with the information processing unit (4) of this computer.

7. System according to Claim 6, **characterized in that** the message loaded into the wheel antilock computer (2) further comprises at least one item of information concerning the place at which it is loaded into this computer.

8. System according to any one of the preceding claims, **characterized in that** the remote-coding tool (6) further includes means (7,8) for checking the characterization state of the wheel antilock computer.
